# EUROPÄISCHE PATENTSCHRIFT

(11) **EP 1 364 827 B1**
(45) Veröffentlichungstag und Bekanntmachung des Hinweises auf die Patenterteilung: **10.11.2004**
(21) Anmeldenummer: 03001985.5
(22) Anmeldetag: 31.01.2003
(51) Int. Cl.: B60N 2/56, B60N 2/58

(54) **Kraftfahrzeugsitz**
Vehicle seat
Siège de véhicule

(30) Priorität: 22.02.2002 DE 10207490
(43) Veröffentlichungstag der Anmeldung: 26.11.2003
(73) Patentinhaber: DaimlerChrysler AG, 70567 Stuttgart (DE)
(72) Erfinder: Buss, Henning, 70839 Gerlingen (DE); Minuth, Karl-Heinz, 71120 Grafenau (DE); Pfahler, Karl, Dr., 70180 Stuttgart (DE); Renner, Lothar, 71154 Nufringen (DE)

(56) Entgegenhaltungen:
- EP-A- 0 424 160
- DE-A- 10 037 065
- DE-C- 10 024 879
- DE-C- 10 156 658
- US-B1- 6 206 465

## Beschreibung

Die Erfindung betrifft einen Kraftfahrzeugsitz mit einem einer Rückenlehne oder einem Sitzkissen zugeordneten Polster der im Oberbegriff des Patentanspruchs 1 angegebenen Art.

Aus der DE 100 24 879 C1 ist bereits ein solcher Sitz mit einem einer Rückenlehne oder einem Sitzkissen zugeordneten Polster als bekannt zu entnehmen, welches ein unteres Polsterteil aus Schaumstoff, eine auf dem unteren Polsterteil aufliegende luftdurchflutbare Ventilationsschicht sowie eine über dieser angeordnete luftdurchlässige obere Polsterschicht umfasst. Das Polster ist dort mit einem Polsterbezug überspannt und mit Abheftungen versehen, entlang denen der Polsterbezug über Befestigungsmittel mit der oberen Polsterschicht verbunden ist. Damit die durch Abheftungen vom Sitzspiegel unterteilten Seitenwangen des Polsters ebenfalls durch das Gebläse für die Sitzspiegel zur Sitzbelüftung mit Luft versorgt werden können, erstreckt sich die Ventilationsschicht bis in Seitenwangen des Polsters. Um dabei eine ausreichende Luftversorgung der Seitenwangen zu erreichen, weist die Ventilationsschicht im Bereich der Abheftungen eine annähernd unveränderte Dicke auf.

Der Erfindung liegt die Aufgabe zugrunde, einen Sitz der eingangs genannten Art mit höherer Qualitätsanmutung und verbesserten Komforteigenschaften zu schaffen.

Die erfindungsgemäße Lösung dieser Aufgabe ergibt sich aus den Merkmalen des Hauptanspruchs.
Vorteilhafte Ausgestaltungen der Erfindung sind den übrigen Ansprüchen zu entnehmen.

Bei dem Kraftfahrzeugsitz nach der Erfindung ist der Polsterbezug und die obere Polsterschicht entlang den Abheftungen - unter Überbrückung der Ventilationsschicht - auch an dem unteren Polsterteil befestigt. Hierdurch können sich der Polsterbezug und die obere Polsterschicht, wie auch die Ventilationsschicht beispielsweise beim Einsteigen eines Sitzinsassen nicht mehr gegenüber dem unteren Sitzteil bewegen, wodurch eine form- und maßhaltige Gestalt des Polsters mit verbesserten Qualitäts- und Komforteigenschaften gewährleistet wird.

Eine besonders rutschfeste Anordnung der Ventilationsschicht auf dem unteren Polsterteil ergibt sich, wenn die Ventilationsschicht zumindest an den Seitenwangen gegenüber der oberen Randseite des Polsters zurückspringend in einer vorzugsweise umlaufend geschlossenen Mulde des unteren Polsterteils einliegt. Außerdem kann hierdurch die form- und maßhaltige Gestalt des Polsters noch weiter verbessert werden, da der Schaumstoff im Randbereich des unteren Polsterteils weicher und homogener ausgebildet werden kann als die z.B. aus Gummihaar oder Abstandsgewirke bestehende Ventilationsschicht.

Weitere Vorteile, Merkmale und Einzelheiten der Erfindung ergeben sich aus der nachfolgenden Beschreibung eines bevorzugten Ausführungsbeispieles sowie anhand der Zeichnungen; diese zeigen in
- Fig. 1: eine schematische Perspektivansicht auf einen erfindungsgemäßen Kraftfahrzeugsitz mit einem einer Rückenlehne oder einem Sitzkissen zugeordneten Polster;
- Fig. 2: eine weitere schematische Perspektivansicht auf den Kraftfahrzeugsitz gemäß Fig.1, wobei vom Polster des Sitzkissens ein Polsterbezug sowie eine obere Polsterschicht teilweise weggelassen ist;
- Fig. 3: eine schematische Schnittansicht durch das Polster des Sitzkissens gemäß den Figuren 1 und 2 entlang der Linie III-III in Fig.2;
- Fig. 4: eine vergrößerte Darstellung des Details IV des Polsters in Fig.3; und in
- Fig. 5: eine schematische Perspektivansicht auf die Befestigung des Polsterbezuges und der oberen Polsterschicht an dem unteren Polsterteil des Sitzkissens.

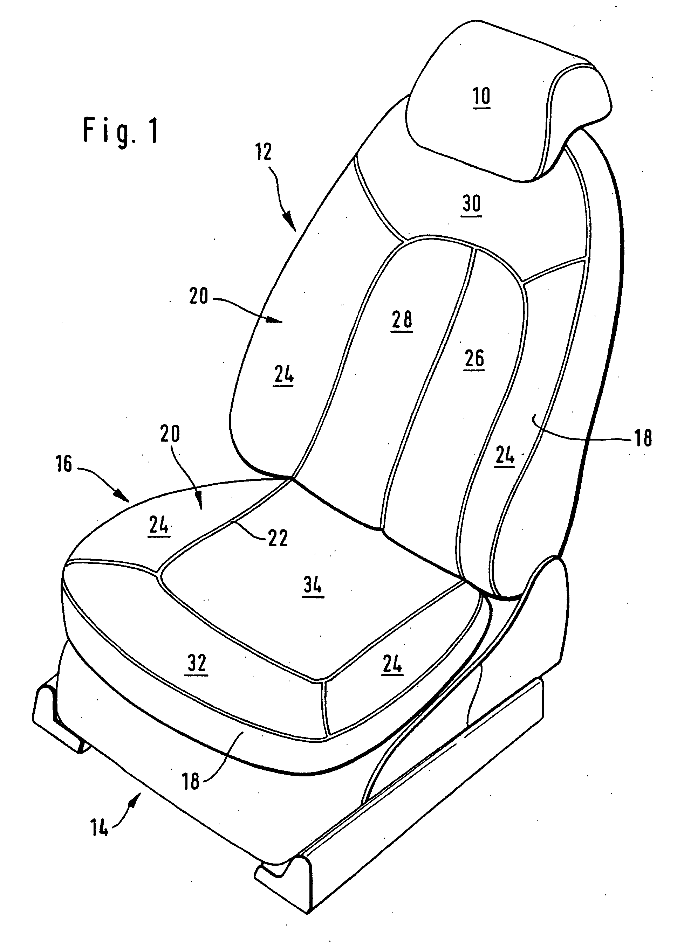

Fig.1 zeigt eine schematische Perspektivansicht auf einen Kraftfahrzeugsitz mit einer eine Kopfstütze 10 tragenden Rückenlehne 12 und einem auf einem Sitzuntergestell 14 ruhenden Sitzkissen 16. Das Sitzkissen 16 und die Rückenlehne 12 umfassen jeweils ein mit einem Polsterbezug 18 überspanntes Polster 20, welches durch Abheftungen 22 in eine Mehrzahl von Teilabschnitte unterteilt ist. So umfasst die Rückenlehne 12 Seitenwangen 24 sowie einen linken, rechten und oberen Sitzspiegelbereich 26,28,30 und das Sitzkissen 16 umfasst Seitenwangen 24 sowie einen vorderen und hinteren Sitzspiegelbereich 32,34.

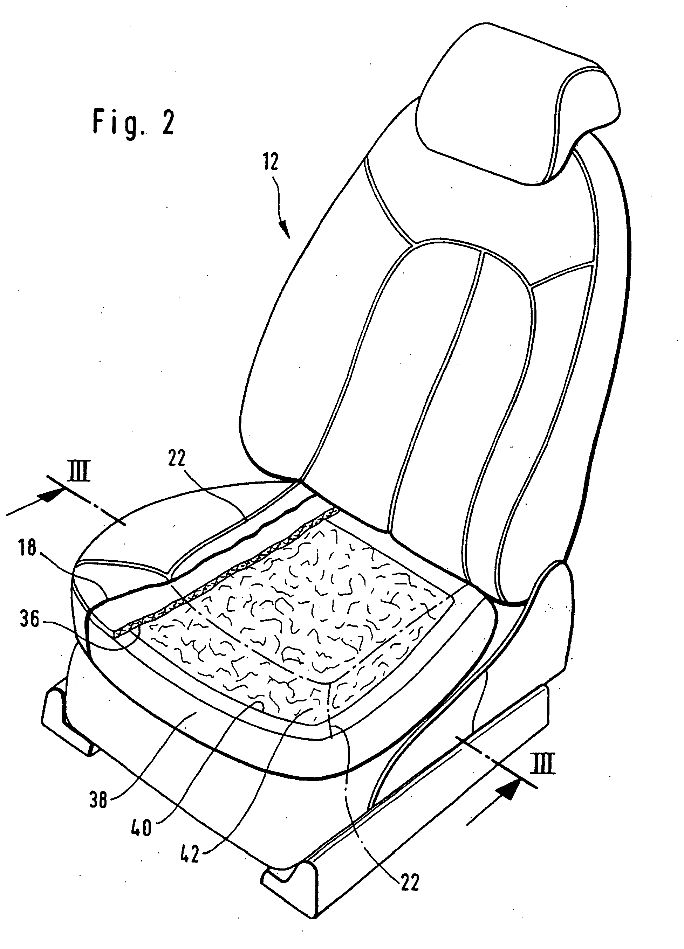

In Fig.2 ist eine weitere schematische Perspektivansicht auf den Kraftfahrzeugsitz gemäß Fig.1 gezeigt, wobei vom Polster 20 des Sitzkissens 16 der Polsterbezug 18 sowie eine obere Polsterschicht 36 teilweise weggelassen sind. Hierdurch wird vom Polster 20 ein unteres Polsterteil 38 aus Schaumstoff erkennbar, aus welchem eine unlaufend geschlossene, im weiteren noch näher erläuterte Mulde 40 ausgespart ist. Innerhalb der Mulde 40 ist eine in der Größe an diese angepasste luftdurchflutbare Ventilationsschicht 42 angeordnet, welche sich vom vorderen und hinteren Sitzspiegelbereich 32,34 bis in die Seitenwangen 24 des Sitzkissens 16 erstreckt.

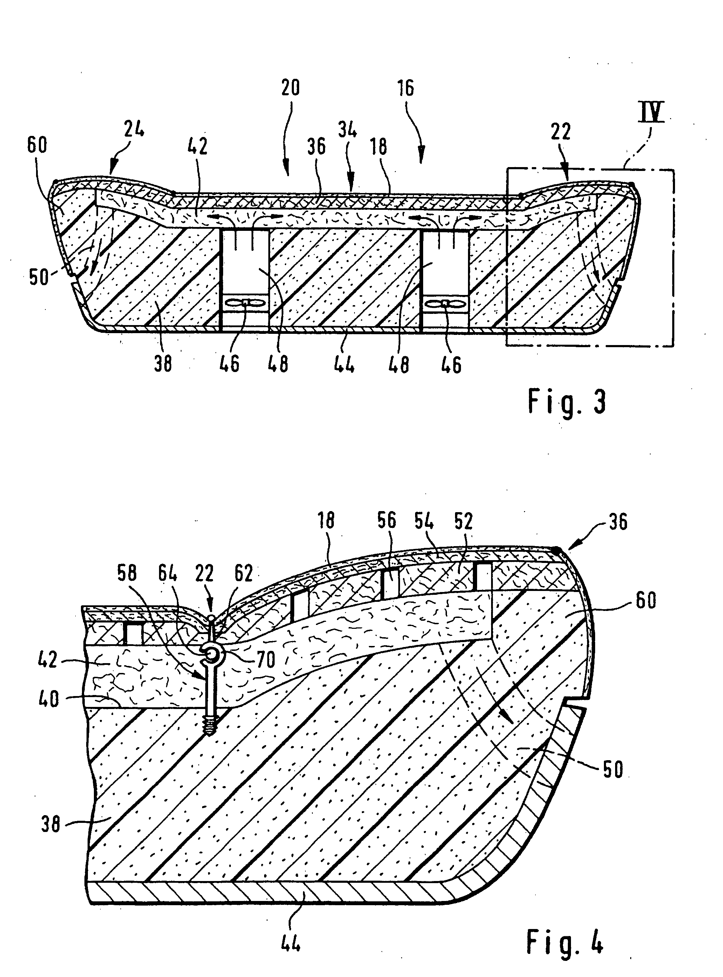

In Zusammenschau von Fig.2 mit Fig.3, welche eine schematische Schnittansicht durch das Polster 20 des Sitzkissens 16 zeigt, wird ersichtlich, dass die aus grob strukturiertem Vliesmaterial, z.B. Gummihaar oder Abstandsgewirke bestehende luftdurchflutbare Ventilationsschicht 42 in ihrer Dicke an die Mulde 42 im unteren Polsterteil 38 angepasst ist. Das untere Polsterteil 38 ist von einem wannenförmigen Sitzträger 44 aufgenommen, welcher seinerseits auf dem in Fig.1 erkennbaren Sitzuntergestell 14 ruht. Die Ventilationsschicht 20 ist hier mittels mehrerer elektrisch betriebener Gebläse 46 mit Luft zu versorgen. Die Gebläse 46 sind innerhalb von senkrecht zur Ventilationsschicht verlaufenden Lufteinlasskanälen 48 angeordnet, welche sich - den Sitzträger 44 durchdringend - von der Unterseite des unteren Polsterteils 38 bis zur Mulde 40 mit der einliegenden Ventilationsschicht 42 erstrecken. Über die Lufteinlasskanäle 48 gelangt - wie mit Pfeilen angedeutetrelativ trockene Luft in die Ventilationsschicht 42, verteilt sich in der Ventilationsschicht 42, nimmt auf im weiteren noch erläuterte Weise Feuchtigkeit des Sitzinsassen auf und strömt über gestrichelt angedeutete Luftauslasskanäle 50 in dem unteren Polsterteil 38 wieder aus der Ventilationsschicht 42 aus. Der zwischen der Ventilationsschicht 42 und dem Polsterbezug 18 angeordnete obere Polsterschicht 36 bestehtwie in Fig.4 ersichtlich - aus einer Unterschicht 52 und einer Oberschicht 54 jeweils aus luftdurchlässiger Polsterwatte, Wollvlies oder einem offenporigen Schaumstoff oder dgl. Die obere Polsterschicht 36 ist dabei mit einer Vielzahl von Sacklöchern 56 versehen, welche die Unterschicht 52 durchdringend von der Oberschicht 54 überdeckt sind und im Überdeckungsbereich mit der Ventilationsschicht 42 angeordnet sind. In dem hier gezeigten Ausführungsbeispiel sind zwischen der Unterschicht 52 und der Oberschicht 54 auch nicht gezeigte Heizdrähte einer elektrischen Sitzheizung angeordnet. Der Polsterbezug 18 besteht aus Textilstoff oder perforiertem Leder bzw. Kunststoff.

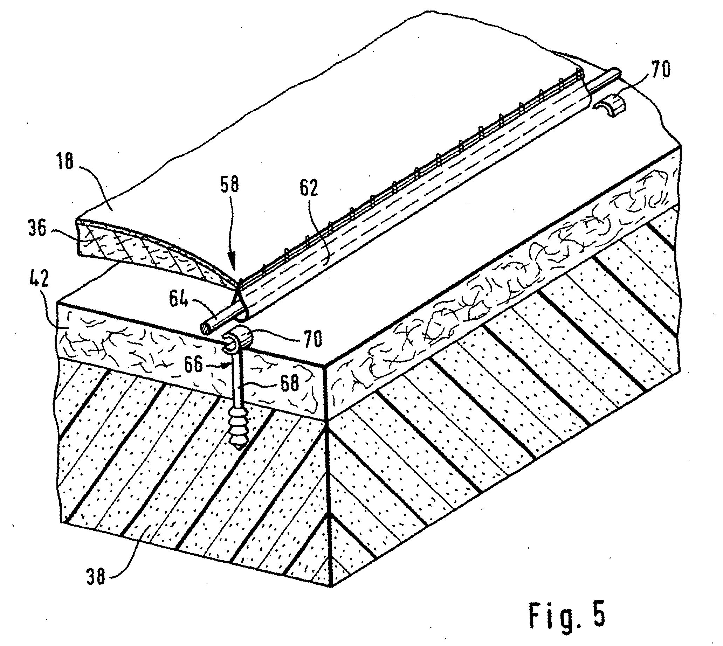

In Fig.4 ist erkennbar, dass - im Bereich der Abheftung 22 zwischen dem Sitzspiegelbereich 34 und der Seitenwange 24 des Sitzkissens 16 - die sich bis in die Seitenwangen 24 erstreckende Ventilationsschicht 42 eine annähernd unveränderte Dicke aufweist, so dass ein von den Gebläse 46 erzeugter Luftstrom innerhalb der Ventilationsschicht 42 ohne Behinderung im Bereich der Abheftung 22 bis in die Seitenwange 24 strömen kann. Damit eine gute Befestigung der oberen Polsterschicht 36 und des Polsterbezugs 18 an dem unteren Polsterteil 38 gewährleistet ist, sind die beiden Teile 18,38 entlang der Abheftungen 22 über im weiteren unter Bezugnahme auf Fig.5 noch erläuterte Befestigungsmittel 58 miteinander sowie mit dem unteren Polsterteil 38 verbunden.

An den Seitenwangen 24 und an dem vorderen Sitzspiegelbereich 32 ist - wie aus den Fig.2 bis 4 ersichtlich - die Ventilationsschicht 42 gegenüber der oberen Randseite 60 des Polsters 20 bzw. des unteren Polsterteils 38 zurückspringend angeordnet. Mit anderen Worten ist auch die Mulde 40 gegenüber den oberen Randseiten 60 der Seitenwangen 24 bzw. des vorderen Sitzspiegelbereichs 32 zurückspringend angeordnet. Hierdurch wird einerseits eine form- und maßhaltige Gestalt des Polsters 20 und andererseits ein Komfortgewinn erzielt, da der Schaumstoff des unteren Polsterteils 38 weicher und homogener ausgebildet werden kann als die z.B. aus Gummihaar oder Abstandsgewirke bestehende Ventilationsschicht 42. Außerdem ist die Ventilationsschicht 42 durch die Anordnung innerhalb der Mulde 40 gegen Verschieben in horizontaler Richtung gesichert.

In Zusammenschau mit Fig.5 wird in schematischer Perspektivansicht die Befestigung des Polsterbezuges 18 und der oberen Polsterschicht 36 an dem unteren Polsterteil 38 des Sitzkissens 16 entlang der Abheftung 22 deutlich. Dabei sind der Polsterbezug 18 und die obere Polsterschicht 36 entlang der Abheftung 22 geschnitten dargestellt. Unterseitig der oberen Polsterschicht 36 ist entlang der Abheftung 22 eine im Querschnitt ovale Tasche 62 angenäht, welche beispielsweise aus Stoff oder dgl. besteht. Die Tasche 62 ist hierbei mit dem Polsterbezug 18 und der oberen Polsterschicht 36 vernäht, wodurch - wie in Fig.4 erkennbar- die obere Polsterschicht 36 im Bereich der Abheftung 22 in ihrer Dicke verringert ist. In die vorne und hinten offene Tasche 62 ist eine Metall- oder Kunststoffstange 64 eingeschoben. Zur Festelegung des Polsterbezuges 18 und der oberen Polsterschicht 36 an dem unteren Polsterteil 38 ist die Stange 64 in Zugverbindungselemente 66 in Form von Rasthaken lösbar einhängbar, welche ihrerseits nach Art eines Dübels an dem unteren Polsterteil 38 befestigt sind. Der Schaft 68 der Rasthaken 66 ist dabei in seiner Länge so bemessen, dass der Kopf 70 der Rasthaken 66 etwa bündig mit der Oberseite der Ventilationsschicht 42 abschließt oder diese leicht überragt. Im eingehängten Zustand der Stange 64 in den Rasthaken 66 liegt die Stange 64 somit auf der Oberseite der Ventilationsschicht 42 auf, ohne die Ventilationsschicht 42 in ihrer Dicke nennenswert einzuschnüren. Hierdurch ist das Überströmen des Luftstromes aus den Sitzspielgelbereichen 32,34 in die Seitenwangen 24 gewährleistet und der Polsterbezug 18 mit der oberen Polsterschicht 36 - unter Überbrückung der Ventilationsschicht 42 - sicher an dem unteren Polsterteil 38 befestigt. Anstelle der hier gezeigten Rasthaken 66 wären auch andere Zugverbindungselemente denkbar, mit denen eine Befestigung des Polsterbezugs 18 und der oberen Polsterschicht 36 an dem unteren Sitzteil ohne nennenswerte Einschnürung der Ventilationsschicht 42 in ihrer Dicke im Bereich der Abheftungen 22 sichergestellt wäre. Auch könnten der Polsterbezug 18 und die obere Polsterschicht 36 ohne die Stangen 64 auf andere Weise - beispielsweise über Zugdrähtean dem unteren Polsterteil 38 befestigt werden. Das Polster der hier nicht näher beschriebenen Rückenlehne 12 kann den selben Aufbau aufweisen wie das Polster des Sitzkissens 16.

Der Belüftung des Sitzes funktioniert folgendermaßen:
Bei Aktivierung der Sitzbelüftung wird über die Gebläse 46 relativ trockene Luft von geeigneten Stellen im Fahrzeuginnenraum angesaugt und in die Ventilationsschicht 42 eingeblasen. Im weiteren durchströmt die eingeblasene Luft die Ventilationsschicht 42 unterhalb der Sitzspiegelbereiche 26-34 und der Randseiten 24 und strömt dann durch Luftäuslassöffnungen 50 wieder aus. Vom Sitzinsassen erzeugte Feuchtigkeit diffundiert durch den Polsterbezug 18 und die obere Polsterschicht 36 und wird von dem trockenen Luftstrom in der Ventilationsschicht aufgenommen und nach außen transportiert. Die Aufnahme der Feuchtigkeit erfolgt insbesondere im Bereich der Sacklöcher 56 der oberen Polsterschicht 36. Dabei macht man sich den relativ hohen Temperaturgradienten zwischen der trockenen, in die Ventilationsschicht einströmenden Luft und der feuchten warmen Luft des Sitzinsassen zunutze, wodurch die Feuchtigkeit sehr gut durch die einströmende Luft absorbiert und abtransportiert wird. Ein Anblasen des Sitzinsassen wird dabei vermieden.

## Patentansprüche

1. Kraftfahrzeugsitz mit einem einer Rückenlehne (12) oder einem Sitzkissen (16) zugeordneten Polster (20), das ein unteres Polsterteil (38) aus Schaumstoff, eine auf dem unteren Polsterteil (38) aufliegende luftdurchflutbare Ventilationsschicht (42) sowie eine über dieser angeordnete luftdurchlässige obere Polsterschicht (36) umfasst, wobei das Polster (20) mit einem Polsterbezug (18) überspannt und mit Abheftungen (22) versehen ist, entlang denen der Polsterbezug (18) über Befestigungsmittel (58) mit der oberen Polsterschicht (36) verbunden ist, und wobei sich die Ventilationsschicht (42) bis in Seitenwangen (24) des Polsters (20) erstreckt und im Bereich der Abheftungen (22) eine annähernd unveränderte Dicke aufweist,
**dadurch gekennzeichnet,**
**dass** der Polsterbezug (18) und die obere Polsterschicht (36) entlang den Abheftungen (22) über die Befestigungsmittel (58) unter Überbrückung der Ventilationsschicht (42) an dem unteren Polsterteil (38) befestigt sind.

2. Kraftfahrzeugsitz nach Anspruch 1,
**dadurch gekennzeichnet,**
**dass** die Ventilationsschicht (42) zumindest an den Seitenwangen (24) gegenüber der oberen Randseite (60) des Polsters (20) zurückspringend angeordnet ist.

3. Kraftfahrzeugsitz nach Anspruch 2,
**dadurch gekennzeichnet,**
**dass** die Ventilationsschicht (42) in einer umlaufend geschlossenen Mulde (40) des unteren Polsterteils (38) einliegt.

4. Kraftfahrzeugsitz nach Anspruch 3,
**dadurch gekennzeichnet**
**dass** unterseitig der oberen Polsterschicht (36) entlang den Abheftungen (22) Stangen (64) oder dgl. befestigt sind, welche über an dem unteren Polsterteil (38) festgelegte Zugverbindungselemente (66) zu befestigen sind.

5. Kraftfahrzeugsitz nach Anspruch 4,
**dadurch gekennzeichnet,**
**dass** die Zugverbindungselemente als Rasthaken (66) ausgebildet sind, in welche die Stangen (64) nach der Montage lösbar eingehängt sind.

6. Kraftfahrzeugsitz nach Anspruch 3,
**dadurch gekennzeichnet,**
**dass** die Stangen (64) oder dgl. in unterseitig der oberen Polsterschicht (36) angenähte Taschen (62) eingeschoben sind.

7. Kraftfahrzeugsitz nach Anspruch 6,
**dadurch gekennzeichnet,**
**dass** die Taschen (62) mit dem Polsterbezug (18) und der oberen Polsterschicht (36) vernäht sind.

8. Kraftfahrzeugsitz nach Anspruch 1,
**dadurch gekennzeichnet,**
**dass** die obere Polsterschicht (36) mit einer Vielzahl von Sacklöchern (56) versehen ist, welche im Überdeckungsbereich mit der Ventilationsschicht (42) angeordnet sind.

## Claims

1. Motor vehicle seat with upholstery padding (20) for a back rest (12) or a seat cushion (16), comprising a bottom padding part (38) made from foam, a ventilation layer (42) through which air can be circulated placed on the bottom padding part (38), and an air-permeable top padding layer (36) placed on top of it, the upholstery padding (20) being spanned by an upholstery cover (18) and provided with seams (22) along which the upholstery cover (18) is joined to the top padding layer (36) by fixing means (58), and the ventilation layer (42) extends into side sections (24) of the upholstery padding (20) with its thickness remaining virtually unchanged in the region of the seams (22),
**characterised in that**
the upholstery cover (18) and top padding layer (36) are secured to the bottom padding part (38), spanning the ventilation layer (42), by fixing means (58) along the seams (22).

2. Motor vehicle seat as claimed in claim 1,
**characterised in that**
the ventilation layer (42) is disposed set back from the top peripheral face (60) of the upholstery padding (20) at least in the side sections (24).

3. Motor vehicle seat as claimed in claim 2,
**characterised in that**
the ventilation layer (42) lies in a peripherally closed depression (40) of the bottom padding part (38).

4. Motor vehicle seat as claimed in claim 3,
**characterised in that**
rods (64) or similar are secured on the bottom face of the top padding layer (36) along the seams (22) and can be secured to the bottom padding part (38) by means of tension connection elements (66).

5. Motor vehicle seat as claimed in claim 4,
**characterised in that**
the tension connecting elements are catch hooks (66) in which the rods (64) are releasably hooked after assembly.

6. Motor vehicle seat as claimed in claim 3,
**characterised in that**
the rods (64) or similar are inserted through pockets (62) stitched to the bottom face of the top padding layer (36).

7. Motor vehicle seat as claimed in claim 6,
**characterised in that**
the pockets (62) are stitched to the upholstery cover (18) and the top padding layer (36).

8. Motor vehicle seat as claimed in claim 1,
**characterised in that**
the top padding layer (36) is provided with a plurality of blind bores (56), which are disposed in the region overlapping the ventilation layer (42).

## Revendications

1. Siège pour véhicule automobile avec un coussin (20) associé à un dossier (12) ou à un coussin d'assise (16), coussin comprenant une partie inférieure de coussin (38) en matériau alvéolaire, une couche de ventilation (42), susceptible d'être irriguée par de l'air et reposant sur la partie inférieure de coussin (38), ainsi qu'une couche supérieure de coussin (36) perméable à l'air, disposée au-dessus de la couche de ventilation (32), où le coussin (20) est couvert d'un revêtement de coussin (18) et muni de coutures (22) le long desquelles le revêtement de coussin (18) est relié, par l'intermédiaire de moyens de fixation (58), à la couche supérieure de coussin (36), et où la couche de ventilation (42) s'étend jusque dans des joues latérales (24) du coussin (20) et présente dans la zone des coutures (22) une épaisseur à peu près inchangée,
**caractérisé en ce que**
le revêtement de coussin (18) et la couche supérieure de coussin (36) sont fixés le long des coutures (22) à la partie inférieure de coussin (38), par l'intermédiaire des moyens de fixation (58), avec pontage de la couche de ventilation (42).

2. Siège pour véhicule automobile selon la revendication 1, **caractérisé en ce que** la couche de ventilation (42) est disposée, au moins sur les joues latérales (24), en retrait par rapport à la face de bordure supérieure (60) du coussin (20).

3. Siège pour véhicule automobile selon la revendication 2, **caractérisé en ce que** la couche de ventilation (42) est placée, intérieurement, dans une auge (40), fermée en pourtour, de la partie inférieure de coussin (38).

4. Siège pour véhicule automobile selon la revendication 3, **caractérisé en ce qu'**en face inférieure de la couche supérieure de coussin (36), le long des coutures (22), sont fixées des tiges (64) ou analogues, devant être fixées par l'intermédiaire d'éléments de liaison à traction (66), fixés sur la partie inférieure de coussin (38).

5. Siège pour véhicule automobile selon la revendication 4, **caractérisé en ce que** les éléments de liaison à traction sont réalisés sous la forme de crochets d'encliquetage (66), dans lesquels les tiges (64) sont accrochées de façon désolidarisable après le montage.

6. Siège pour véhicule automobile selon la revendication 3, **caractérisé en ce que** les tiges (64) ou analogues sont insérées dans des poches (62), cousues en face inférieure de la partie supérieure de coussin (36).

7. Siège pour véhicule automobile selon la revendication 6, **caractérisé en ce que** les poches (62) sont cousues au revêtement de coussin (18) et à la couche supérieure de coussin (36).

8. Siège pour véhicule automobile selon la revendication 1, **caractérisé en ce que** la couche supérieure de coussin (36) est munie d'une pluralité de trous borgnes (56), disposés dans la zone de recouvrement avec la couche de ventilation (42).
